(19) **Europäisches Patentamt**

**European Patent Office**

**Office européen des brevets**

(11) **EP 1 256 898 A2**

(12) **EUROPEAN PATENT APPLICATION**

(43) Date of publication:
**13.11.2002 Bulletin 2002/46**

(51) Int Cl.$^7$: **G06F 19/00**

(21) Application number: **02010363.6**

(22) Date of filing: **07.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.05.2001 JP 2001141308**

(71) Applicant: **Fuji Photo Film Co., Ltd.
Kanagawa-ken (JP)**

(72) Inventor: **Takeo, Hideya,
c/o Fuji Photo Film Co., Ltd.,
Ashigarakami-gun, Kanagawa-ken (JP)**

(74) Representative: **Klunker . Schmitt-Nilson . Hirsch
Winzererstrasse 106
80797 München (DE)**

(54) **Prospective abnormal shadow detecting system**

(57)    A prospective abnormal shadow detecting system detects a prospective abnormal shadow in a radiation image on the basis of radiation image data representing the radiation image. The prospective abnormal shadow detecting system is provided with a level selecting switch for selecting a detecting level and detects a prospective abnormal shadow to the detecting level selected by the level selecting switch.

EP 1 256 898 A2

**Description**

BACKGROUND OF THE INVENTION

Field of the Invention

This invention relates to a system for detecting a prospective abnormal shadow in a radiation image, and more particularly to a system for detecting a prospective abnormal shadow by detecting level, e.g., malignant, benignant/malignant, or benignant, in a radiation image of an object.

Description of the Related Art

In the medical field, to find a diseased part of a patient or to observe a diseased part of a patient and diagnose progress of disease by reading a radiation image of the object (patient) has been a common operation. However, radiation image reading often depends upon experience and abilities of the reader and is not necessarily objective.
For example, it is necessary to find an abnormal shadow representing a growth and/or a micro calcification representative of a cancerous part in a mammogram (a radiation image of a breast) taken for the purpose of a breast cancer examination. However, depending on the reader, the abnormal shadow range cannot be properly designated. Accordingly, there has been a demand to properly detect an abnormal shadow including shadows of a growth and a micro calcification.
In order to meet this demand, we, this applicant, have proposed a prospective abnormal shadow detecting system (a computer-aided image diagnosis system), for instance, in Japanese Unexamined Patent Publication Nos. 8(1996)-294479 and 8(1996)-287230) in which a prospective abnormal shadow is automatically detected by the use of a computer on the basis of image data representing a radiation image of the object. In the prospective abnormal shadow detecting system, a prospective abnormal shadow is automatically detected on the basis of density distribution and/or configurational feature by the use of an iris filter processing which is mainly suitable for detecting a growth shadow or a morphology filter which is mainly suitable for detecting a prospective micro calcification shadow.
In the iris filter processing, a prospective abnormal shadow is detected by comparing the output of the iris filter which represents a maximum value of the degree of convergence of density gradients in the image signal with a predetermined threshold value. The iris filter processing is effective to detect a prospective growth shadow inherent to the breast cancer. In the morphology filter processing, morphology operation is carried out on the image signal by the use of structural elements larger than the size of the micro calcification shadow to be detected and the output of the operation is compared with a predetermined threshold value, whereby a prospective micro calcification shadow inherent to breast cancer is automatically detected.
We, this applicant, have further proposed a method of detecting a final prospective abnormal shadow having a higher probability of being a malignant prospective abnormal shadow than a primary prospective abnormal shadow obtained by the iris filter processing or the morphology filter processing by evaluating the malignancy of the primary prospective abnormal shadow by the use of a feature value representing features of the shape, the interior and the edges of the primary prospective abnormal shadow as disclosed, for instance, in Japanese Unexamined Patent Publication No. 9(1997)-167238.
However depending on the purpose of examination, it is sometimes preferred that malignant prospective abnormal shadows (having a high probability of being a malignant abnormal shadow) be detected together with benignant prospective abnormal shadows (having a high probability of being a benignant abnormal shadow). That is, though not being cancer for the time being, a benignant prospective abnormal shadow can turn to a malignant tumor (cancer) and accordingly it is preferred that a malignant prospective abnormal shadow and a benignant prospective abnormal shadow (will be generically referred to as "benignant/malignant prospective abnormal shadow", hereinbelow) be both detected and recorded, for instance, in a primary examination. To the contrast, in a close examination, generally only a malignant prospective abnormal shadow is detected since it is necessary to determine the degree of malignancy and/or to determine whether an operation is necessary.
Thus, there has been required a prospective abnormal shadow detecting system in which the detecting level (the level to which abnormal shadows can be detected, e.g., malignant, benignant/malignant, or benignant) can be set and especially easily.

SUMMARY OF THE INVENTION

In view of the foregoing observations and description, the primary object of the present invention is to provide a prospective abnormal shadow detecting system in which prospective abnormal shadows can be detected to a desired level by a simple operation.

In accordance with the present invention, there is provided a prospective abnormal shadow detecting system comprising a prospective abnormal shadow detecting means which detects a prospective abnormal shadow in a radiation image on the basis of radiation image data representing the radiation image characterized in that the prospective abnormal shadow detecting system is provided with a level selecting means for selecting a detecting level and the prospective abnormal shadow detecting means detects a prospective abnormal shadow to the detecting level selected by the level selecting means.

The term "prospective abnormal shadow" as used here means, for instance, a prospective area of a growth shadow detected by the iris filter processing or of a micro calcification shadow detected by the morphology filter processing. Otherwise, the term "prospective abnormal shadow" as used here may mean a prospective area selected from a plurality of prospective areas according to, for instance, malignancy of the prospective areas on the basis of a predetermined evaluation threshold. That is, the term "prospective abnormal shadow" as used here may mean any area so long as it is detected as a prospective area on the basis of a radiation image data representing a radiation image of an object.

The term "detecting level" as used here means a level of the prospective abnormal shadow to be detected such as "malignant", "benignant/malignant" or "benignant" which can be classified according to a characteristic of, for instance, the shape or distribution of the prospective abnormal shadow. For example, in the case of a prospective growth shadow, there is a high probability that the prospective abnormal shadow is malignant when there exist specula along the edge of the prospective abnormal shadow while there is a high probability that the prospective abnormal shadow is benignant when the edge is smooth and round. In the case of a prospective micro calcification shadow, the level of the prospective micro calcification shadow, e.g., malignant or benignant, can be known, for instance, by the distribution of prospective calcified points. Further, it is possible to determine whether the prospective abnormal shadow is malignant or benignant by a feature value representing a feature of the interior or the edge of the prospective abnormal shadow. As the feature value, roundness of the prospective growth shadow detected by the iris filter processing, variance calculated on the basis of histogram of the interior density, contrast, angular moment, and the like can be employed as well as variance, unevenness, value of correlation, moment, entropy and the like representing features of edges of a detected prospective growth shadow. Further, it is possible to determine whether the prospective abnormal shadow is malignant or benignant by the likelihood ratio based on a Mahalanobis distance (Dmi) defined by the following formula (1).

$$ Dmi = \left( \overrightarrow{x} - \overline{\overrightarrow{mi}} \right)' \sum_{i}^{-1} \left( \overrightarrow{x} - \overline{\overrightarrow{mi}} \right) \quad \cdots\cdots\cdots \quad (1) $$

wherein $\Sigma_i$ represents a covariance matrix of a pattern class wi, that is,

$$ \sum_{i} = (1/Ni) \sum_{x \in wi} \left( \overrightarrow{x} - \overline{\overrightarrow{mi}} \right) \left( \overrightarrow{x} - \overline{\overrightarrow{mi}} \right)^{t} $$

wherein t represents a transposed vector (a transverse vector), $\overrightarrow{x}$ represents a feature value x in vector (that is, $\overrightarrow{x}$ =(x1, x2, ···, xN), $\Sigma_i^{-1}$ represents an inverse matrix of $\Sigma_i^{-1}$, and $\overrightarrow{x}$ represents the average of the pattern class wi (that is

$$ \overline{\overrightarrow{mi}} = (1/Ni) \sum_{x \in wi} \overrightarrow{x} ) . $$

The term "benignant/malignant prospective abnormal shadow" is a generic term denoting both a malignant prospective abnormal shadow and a benignant prospective abnormal shadow, and that the detecting level is benignant/ malignant means that both a benignant abnormal shadow and a malignant abnormal shadow are to be detected.

The detecting level selecting means is a means for selecting a desired detecting level out of a plurality of detecting levels which have been set in advance.

The prospective abnormal shadow detecting means of the prospective abnormal shadow detecting system of the present invention may be arranged to detect only a malignant prospective abnormal shadow when the detecting level selected by the detecting level selecting means is "malignant" and to detect both a malignant prospective abnormal shadow and a benignant prospective abnormal shadow when the detecting level selected by the detecting level selecting means is "benignant/malignant". That is, the detecting level may be set to be selected between "malignant" and "benignant/malignant".

The prospective abnormal shadow detecting system of this invention may be further provided with an input means for inputting purpose information representing the purpose of detection and the detecting level selecting means may be provided with an automatic detecting level selecting function for automatically selecting a detecting level on the basis of the purpose information input through the input means.

The purpose information may be any information so long as the detecting level selecting means can automatically select a detecting level on the basis of the information. For example, the purpose information may be reader information representing the doctor who reads the radiation image, terminal information representing the terminal through which the radiation image is to be output, or examination purpose information representing the purpose of examination such as a primary examination or a close examination. The reader information and the terminal information can be employed as the purpose information since the doctor and the terminal are determined by the purpose of examination.

The input means may be any means so long as purpose information can be input through the means. For example, the input means may be a means through which the user manually inputs purpose information or a means through which purpose information is automatically input from another apparatus.

In the prospective abnormal shadow detecting system of this invention, since there is provided a detecting level selecting means which can switch the level of the prospective abnormal shadow to be detected by selecting a desired detecting level out of a plurality of kinds of detecting level which have been set in advance, prospective abnormal shadows can be detected to a desired level by a simple operation.

When the prospective abnormal shadow detecting system of this invention is further provided with an input means for inputting purpose information representing the purpose of detection and the detecting level selecting means is provided with an automatic detecting level selecting function for automatically selecting a detecting level on the basis of the purpose information input through the input means, prospective abnormal shadows can be more efficiently detected to a detecting level proper to the purpose of detection.

BRIEF DESCRIPTION OF THE DRAWINGS

Figure 1 is a schematic block diagram showing a prospective abnormal shadow detecting system in accordance with an embodiment of the present invention,

Figure 2A is an example of a mammogram to which the present invention is applied,

Figures 2B to 2D are views for illustrating the degree of convergence of density gradient vectors in the mammogram,

Figure 3 is a view showing a mask (5 pixels X 5 pixels in size) for calculating gradient vectors in the iris filter processing,

Figure 4 is a view for illustrating the degree of convergence of gradient vectors for the pixel of current interest,

Figure 5 is a view for illustrating an iris filter whose size and shape are changed to conform to the size and shape of the growth,

Figure 6 is a view showing an imaginary circle having an area equivalent to that of the prospective area,

Figure 7 is a view for illustrating formation of the IFED image,

Figure 8 is a schematic view showing an IFED image,

Figure 9 is a view for illustrating formation of the simultaneous matrix on the basis of the IFED image,

Figure 10 is a schematic view showing a simultaneous matrix,

Figure 11 is a view for illustrating the first likelihood ratio,

Figure 12 is a view for illustrating the second likelihood ratio, and

Figure 13 is a view for illustrating the third likelihood ratio.

DESCRIPTION OF THE PREFERRED EMBODIMENT

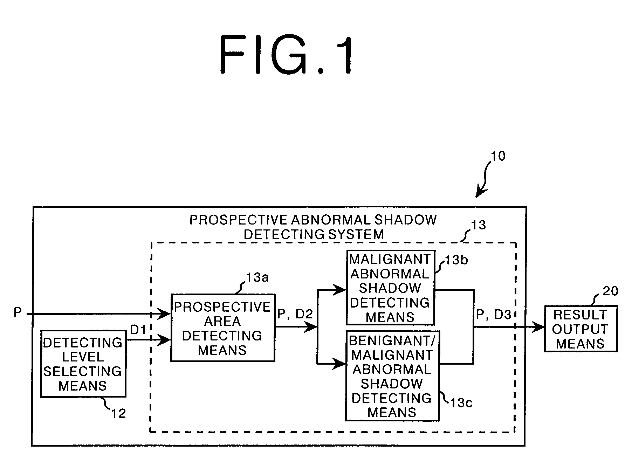

In Figure 1, a prospective abnormal shadow detecting system 10 comprises a detecting level selecting means 12 which selects the detecting level of an prospective abnormal shadow to be detected, and a prospective abnormal shadow detecting means 13 into which detecting level information D1 representing the detecting level selected by the detecting level selecting means 12 and image data P representing a radiation of an object generated by, for instance, a radiation image read-out apparatus are input and which detects a prospective abnormal shadow of the selected detecting level in the radiation image.

The prospective abnormal shadow detecting means 13 comprises a prospective area detecting means 13a which detects prospective abnormal shadow areas (will be simply referred to as "prospective areas", hereinbelow), a malignant prospective abnormal shadow detecting means 13b which detects only a malignant prospective abnormal shadow out of the prospective areas detected by the prospective area detecting means 13a, and a benignant/malignant prospective abnormal shadow detecting means 13c which detects benignant/malignant prospective abnormal shadows out of the prospective areas detected by the prospective area detecting means 13a.

To the prospective abnormal shadow detecting system 10 is connected a result output means 20 which outputs the result of detection by the malignant prospective abnormal shadow detecting means 13b or the benignant/malignant prospective abnormal shadow detecting means 13c. The result output means 20 may be, for instance, a CRT which displays the result of detection by the malignant prospective abnormal shadow detecting means 13b or the benignant/ malignant prospective abnormal shadow detecting means 13c together with the overall radiation image based on the image data P.

Operation of the prospective abnormal shadow detecting system 10 of this embodiment will be described hereinbelow.

When the user selects a desired detecting level by the detecting level selecting means 12, detecting level information D1 representing the selected detecting level is input into the prospective area detecting means 13a. In this particular embodiment, the detecting level is selected from a "malignant" and a "benignant/malignant".

Upon receipt of detecting level information D1, the prospective area detecting means 13a reads out image data P representing an image to be diagnosed from the image read-out apparatus or the like and detects a prospective growth shadow by the iris filter processing.

In the iris filter processing, gradients of image signal are calculated as gradient vectors and prospective growth shadow areas are detected by the use of an iris filter which outputs degrees of convergence of the gradient vectors. That is, in a radiation image recorded on X-ray film (an image represented by a high density, high level signal), the growth shadow area is generally somewhat lower in density (values of image signal components for the pixels) than the surrounding area and has a substantially circular peripheral edge with the density lowers from the periphery toward the center thereof. In the iris filter processing, the prospective growth shadow area can be detected on the basis of such a local density gradient.

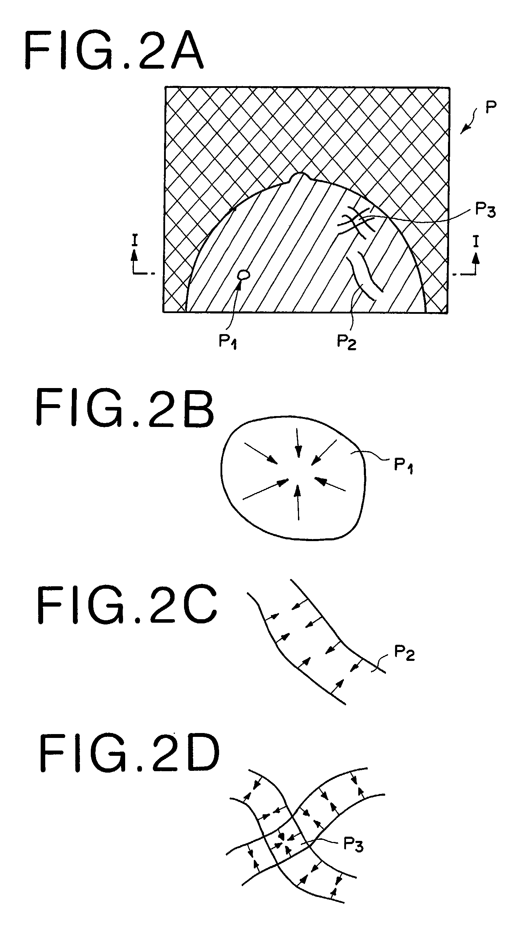

The iris filter processing will be described in more detail with reference to a mammogram shown in Figure 2A, hereinbelow. The gradient vector for any pixel in a prospective growth shadow P1 in an original image data P is substantially directed toward the center of the prospective growth shadow P1 as shown in Figure 2B. To the contrast, in an elongated shadow P2 of blood vessels or mammary glands, gradient vectors are not converged on a particular point as shown in Figure 2C. Accordingly, by locally evaluating distribution of directions of gradient vectors and extracting an area where gradient vectors are converged on a particular point, the prospective growth shadow P1 can be detected. In a shadow P3 of a part where two elongated shadows such as of blood vessels or mammary glands intersect each other, gradient vectors can converge on a particular point as shown in Figure 2D, and accordingly, such a part P3 (will be referred to as "pseudo-abnormal-shadow", hereinbelow) can be detected as a prospective growth shadow. A specific algorithm of the iris filter processing will be described, hereinbelow.

Calculation represented by the following formula (2) is carried out for each of the pixels j of the radiation image represented by the image data P and the orientation θ of the density gradient vector of the image data is obtained.

$$\theta = \tan^{-1} \frac{(f_3+f_4+f_5+f_6+f_7)-(f_{11}+f_{12}+f_{13}+f_{14}+f_{15}+)}{(f_1+f_2+f_3+f_{15}+f_{16})-(f_7+f_8+f_9+f_{10}+f_{11})} \tag{2}$$

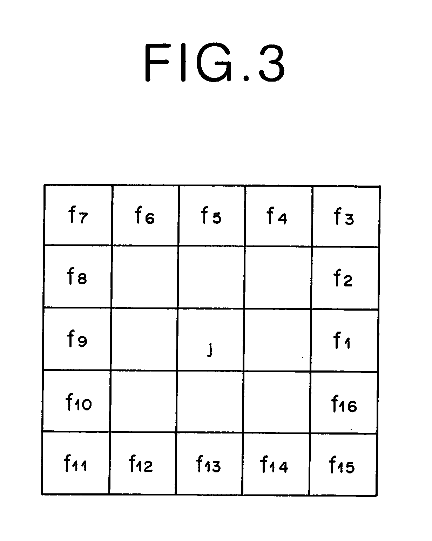

wherein $f_1$ to $f_{16}$ are, as shown in Figure 3, values (image data) of pixels on the outer periphery of a 5×5 pixel mask about a given pixel j (pixel of current interest). Needless to say, the size of the mask need not be limited to 5×5.

Then, the degree of convergence C of the gradient vectors onto each of the pixels j of the image is calculated according to the following formula (3).

$$C = (1/N)\sum_{j=1}^{N}\cos\theta_j \quad \cdots\cdots \quad (3)$$

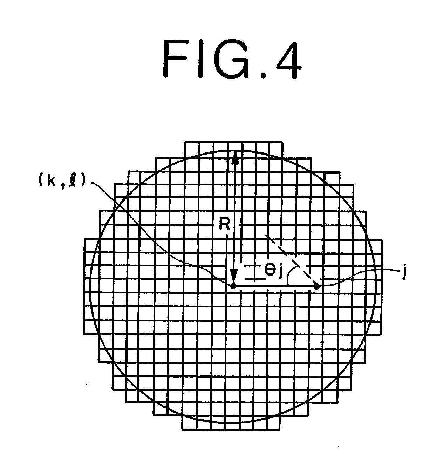

wherein N represents the number of pixels in a circle with its center at the pixel (the pixel of current interest) and with a radius of R and $\theta_j$ represents the angle between the straight line connecting the pixel of current interest and each of the pixels j in the circle and the gradient vector for the pixel j as calculated according to the aforesaid formula (1) as shown in Figure 4. Accordingly, the degree of convergence C as calculated according the aforesaid formula (3) becomes high when many of the orientations $\theta_j$ of the gradient vectors for the pixels j are directed toward the pixel of current interest.

Since the gradient vectors for pixels j in the vicinity of a growth shadow are all directed toward the center of the growth shadow irrespective of the contrast of the growth shadow, a pixel which is high in degree of convergence C may be considered to be in a central portion of the growth shadow. To the contrast, in an elongated shadow of a blood vessel or the like, many of gradient vectors are directed toward in one direction and accordingly, pixels in such a shadow cannot be high in degree of convergence C. Accordingly, by calculating the degree of convergence C for all the pixels in the image with each pixel set as the pixel of current interest and determining whether the degree of convergence C for each pixel is higher than a predetermined threshold value, a growth shadow can be detected. That is, this filter is less apt to be affected by blood vessels or mammary glands, and a growth shadow can be more efficiently detected by the use of this filter than by the use of a normal differential filter. (step A2):processing of improving adaptability to shape and detecting accuracy of the filter

Further, in a practical processing, he size and shape of the filter are changed to conform to the size and shape of the growth so that growth can be detected without affected by the size and shape of the growth.

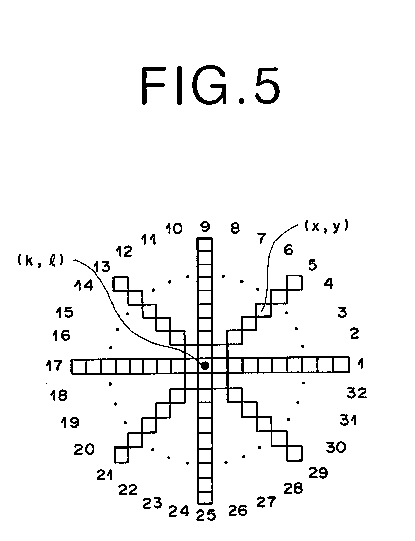

Figure 5 shows an example of such a filter. In the filter shown in Figure 5, the degree of convergence C is evaluated on the basis of only pixels on radial lines extending from the pixel of current interest in M directions at regular intervals of $2\pi/M$ (in the example shown in Figure 5, in 32 directions at regular intervals of 11.25° ).

The coordinates ([x], [y]) of a pixel which is in an i-th direction (on an i-th radial line) and an n-th pixel as numbered from the pixel of current interest are given by the following formulae (4) and (5) wherein (k, 1) are the coordinates of the pixel of current interest, and [x] and [y] are maximum integers which are not larger than x and y, respectively.

$$x=k+n \cos\{2\pi(i-1)/M\} \qquad (4)$$

$$x=l+n \sin\{2\pi(i-1)/M\} \qquad (5)$$

The value of outputs of the pixels from the pixel of current interest to the pixel at which the degree of convergence C is maximized on each of the 32 directions is taken as the degree of convergence $C_{imax}$ in the direction, and the degrees of convergence $C_{imax}$ in all the directions are averaged. The average of the degrees of convergence $C_{imax}$ in all the directions thus obtained is taken as the degree of convergence C of the gradient vectors for the pixel of current interest.

Specifically, the degrees of convergence $C_{i(n)}$ are calculated for pixels in the range of from a pixel of current interest to a pixel which is in an i-th direction (on an i-th radial line) and an n-th pixel as numbered from the pixel of current interest is calculated according to the following formula (6).

$$C_{i(n)} = \sum_{\lambda=1}^{n}\{(\cos\theta_{i\lambda})/n\}, R_{min} \leq n \leq R_{max} \quad \cdots\cdots \quad (6)$$

That is, formula (6) is for calculating the degrees of convergence $C_{i(n)}$ for the pixels in the range of from the pixel of current interest to a pixel which is between the $R_{min}$-th pixel and the $R_{max}$-th pixel as numbered from the pixel of current interest on each radial line, the values of $R_{min}$ and $R_{max}$ respectively corresponding to a minimum radius and a maximum radius of a growth shadow to be extracted.

Then the degrees of convergence C of the gradient vectors are calculated according to the following formulae (7) and (8).

$$C_{i\,max} = \max_{R_{min} \leq n \leq R_{max}} Ci(n) \quad \cdots\cdots \quad (7)$$

$$C = (1/32)\sum_{i=1}^{32} C_{i\,max} \quad \cdots\cdots \quad (8)$$

Since the $C_{imax}$ obtained from formula (7) is the maximum value of the degrees of convergence $C_{i(n)}$ in each direction obtained according to formula (6), the area between the pixel of current interest and the pixel at which the degree of convergence $C_{i(n)}$ is maximized is a prospective growth shadow area in the direction.

By obtaining prospective growth shadow areas in all the directions according to formula (7) and connecting the prospective growth shadow areas in adjacent directions by a linear line or non-linear line, the outer shape of the overall prospective growth shadow area can be determined.

In formula (8), the maximum values $C_{imax}$ of the degrees of convergence $C_{i(n)}$ for the respective directions are averaged. By comparing the average of the maximum values $C_{imax}$ of the degrees of convergence $C_{i(n)}$, which is the output I of the iris filter, with a threshold value T, whether the area having its center at the pixel of current interest is a prospective growth shadow (a prospective abnormal shadow) is determined. That is, when $I \geqq T$ ($I > T$), it is determined that the area having its center at the pixel of current interest is a prospective growth shadow and when $I < T$ (or $I \leqq T$), it is determined that the area having its center at the pixel of current interest is not a prospective growth shadow.

The degree of convergence $C_{i(n)}$ may be calculated according to the following formula (6') in place of the aforesaid formula (6).

$$C_{i(n)} = \frac{1}{n - R_{\min} + 1} \sum_{\lambda = R_{\min}}^{n} \cos \theta_{i\lambda}, \; R_{\min} \leq n \leq R_{\max} \quad \cdots\cdots \; (6')$$

That is, formula (6') is for calculating the degrees of convergence $C_{i(n)}$ for the pixels in the range of from the $R_{\min}$-th pixel to a pixel which is between the $R_{\min}$-th pixel and the $R_{\max}$-th pixel as numbered from the pixel of current interest on each radial line, the values of $R_{\min}$ and $R_{\max}$ respectively corresponding to a minimum radius and a maximum radius of a growth shadow to be extracted.

When prospective growth shadows are thus detected, position information D2 and image data P for all the prospective growth shadows are input into the malignant abnormal shadow detecting means 13b or the benignant/malignant abnormal shadow detecting means 13c selected by the detecting level selecting means 12.

When the position information D2 and the image data P for all the prospective growth shadows are input into the malignant abnormal shadow detecting means 13b, the malignant abnormal shadow detecting means 13b further extracts malignant growth shadows from all the prospective growth shadows in the following manner.

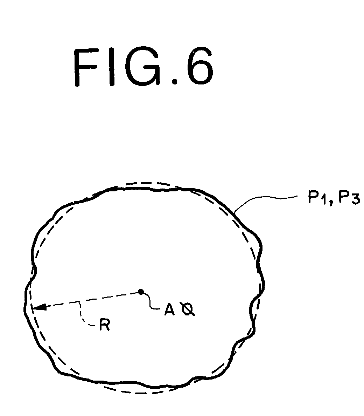

The malignant abnormal shadow detecting means 13b first calculates feature values of each prospective growth shadow areas on the basis of the position information D2 and the image data P. As a first feature value, roundness (spreadness) Sp is used since a growth shadow is like a circle in contour. Then the area A and the center of gravity AO of each of the prospective growth shadow areas including true growth shadow P1 and pseudo-growth shadows P3 are calculated and a circle which has an area equivalent to the area A and its center on the gravity AO is imagined as shown in Figure 6. Then spreadness is calculated as a ratio of the area of the part of the prospective growth shadow areas circumscribed by the imaginary circle to the area A. That is, when the area over which the prospective growth shadow area overlap the imaginary circle is represented by A', the spreadness Sp is represented by the following formula (9).

$$Sp = A'/\pi R^2 \tag{9}$$

As feature values representing the inside of the prospective growth shadow area, the following three feature values are employed. That is, a histogram of densities S of the prospective growth shadow area is created, and second to fourth feature values (variance _var,_ contrast _con_ and angular moment) are calculated according to the following formulae (10) to (12).

$$\mathrm{var} = \sum_{\lambda}^{N} \left\{ \left( S - \overline{S} \right)^2 \cdot P(S) \right\} \quad \cdots\cdots \; (10)$$

$$con = \sum^{N} \left\{ \left(S\right)^2 \cdot P\!\left(S\right) \right\} \quad \cdots\cdots \quad (11)$$

$$\mathrm{var} = \sum^{N} \left\{ P\!\left(S\right) \right\}^{2} \quad \cdots\cdots \quad (12)$$

wherein $\bar{S}$ represents the average of the densities in prospective growth shadow area and N represents the number of pixels in the prospective growth shadow area.

Feature values representing the outer edge of the prospective growth shadow area are calculated by the use of an IFED (Iris Filter Edge) image in the following manner.

As a first step, square areas including the respective prospective growth shadows P1 detected by the iris filter processing (can include a pseudo-abnormal-shadow P3) and their vicinities are extracted. An IFED image is created for each of the extracted square area in the following manner.

A point at which the degrees of convergence $C_{i(n)}$ is maximized according to the aforesaid formula (7) on each radial line is obtained over the entire length thereof. Though, in the aforesaid formulae (6) and (7), the value of $\underline{n}$ is limited in the range from $R_{min}$ to $R_{max}$, the point at which the degrees of convergence $C_{i(n)}$ is maximized is obtained over the entire length thereof without the value of $\underline{n}$ limited in the range from $R_{min}$ to $R_{max}$ in this processing.

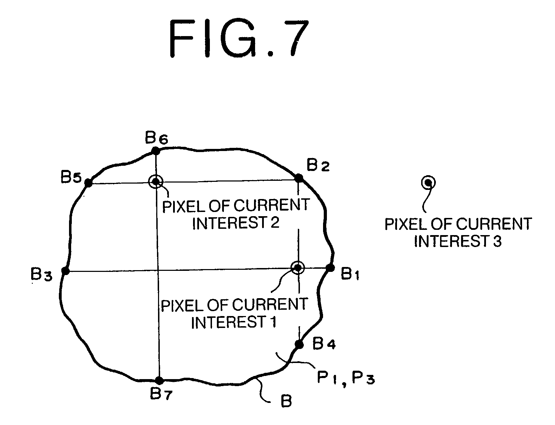

As a result, when the pixel of current interest is inside the prospective growth shadow (P1 or P3), the value of $\underline{n}$ which gives the point at which the degrees of convergence $C_{i(n)}$ is maximized on the i-th radial line (formula (7)) indicates the pixel(s) at which the i-th line intersects the edge of the prospective abnormal shadow B (Figure 7). For example, for a pixel of current interest 1, the value of $\underline{n}$ indicates pixels B1, B2, B3 and B4, and for a pixel of current interest 2, the value of $\underline{n}$ indicates pixels B2, B5, B6 and B7.

To the contrast, when the pixel of current interest is outside the prospective growth shadow (P1 or P3), the value of $\underline{n}$ which gives the point at which the degrees of convergence $C_{i(n)}$ is maximized on the i-th radial line indicates the pixel of current interest itself (e.g., pixel of current interest 3 in Figure 7).

With all the pixels in the extracted area taken as the pixel of current interest in sequence, the frequency at which each pixel becomes the point of maximum convergence (the point at which the degrees of convergence $C_{i(n)}$ is maximized) is counted.

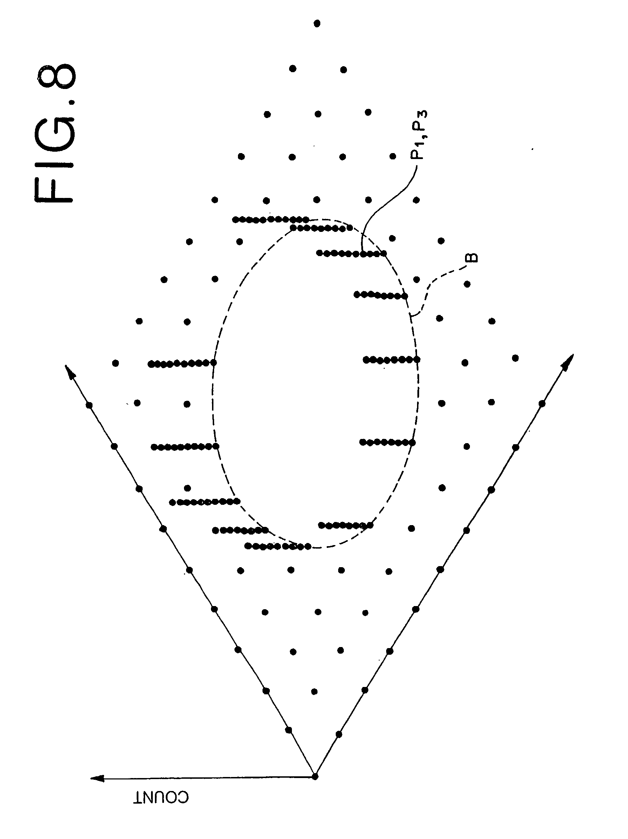

The counts for the pixels outside the prospective abnormal shadow are all "1", the counts for the pixels inside the prospective abnormal shadow are all "0" and the counts for the pixels on the edge of the prospective abnormal shadow are all larger than 1 as shown in Figure 8. The image representing the values of the count for the pixels in the extracted area is defined to be an IFED (Iris Filter Edge) image.

Then, the IFED image is processed to create a simultaneous matrix in the following manner.

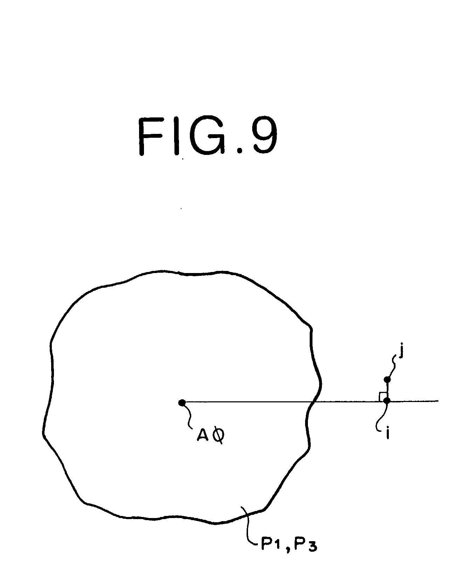

As shown in Figure 9, the center of gravity AO of the prospective growth shadow (P1 or P3) is obtained and a radial line is extended from the center of gravity AO. Then a given point on the radial line is taken as point $\underline{i}$ and a point which is on a line perpendicular to the radial line and is at a distance of two pixels from the point $\underline{i}$ is taken as point $\underline{j}$.

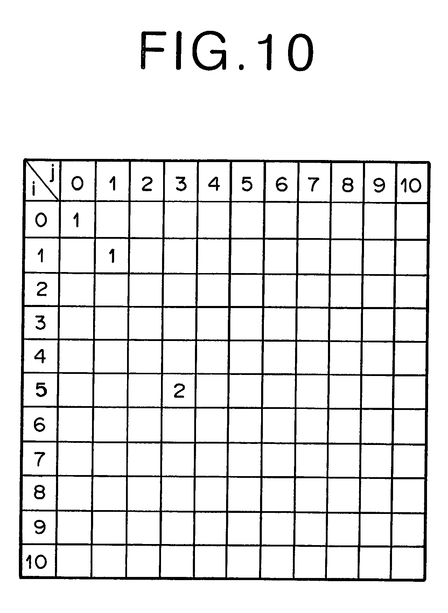

The frequency at which the relation between the counts for pixel $\underline{i}$ and pixel $\underline{j}$ becomes a certain relation (e. g., [i=0, j=0], [i=1, j=0], [i=1, j=1] $\cdots\cdot$) is counted up in a matrix such as shown in Figure 10. For example, when the count for pixel $\underline{i}$ is 1 and the count for pixel $\underline{j}$ is 1, that is, both pixels $\underline{i}$ and $\underline{j}$ are outside the prospective growth shadow P1 or P3, 1 is written in the cell (1, 1) where i=1 and j=1. When the count for pixel $\underline{i}$ is 0 and the count for pixel $\underline{j}$ is 0, that is, both pixels $\underline{i}$ and $\underline{j}$ are inside the prospective abnormal shadow P1 or P3, 1 is written in the cell (0, 0) where i=0 and j=0. When the count for pixel $\underline{i}$ is 5 and the count for pixel $\underline{j}$ is 3, that is, both pixels $\underline{i}$ and $\underline{j}$ are on the edge of the prospective abnormal shadow P1 or P3, 1 is written in the cell (5, 3) where i=5 and j=3.

The radial line is rotated and the pixel $\underline{i}$ is changed so that all the pixels in the IFED image becomes the pixel $\underline{i}$, and the value in each cell is incremented each time the relation between the counts for the pixel $\underline{i}$ and the pixel $\underline{j}$ becomes that represented by the cell. For example, when the relation where the count for pixel $\underline{i}$ is 5 and the count for pixel $\underline{j}$ is 3 appears twice, then the count in the cell (5, 3) is 2. In this manner, the simultaneous matrix shown in Figure 10 is completed.

Since the growth shadow is generally circular in shape and the points $\underline{i}$ and $\underline{j}$ are very close to each other, when the points i and j are both on the edge of the prospective abnormal shadow, that is, the IFEFD image counts for the pixels $\underline{i}$ and $\underline{j}$ are both larger than 1, there is a strong possibility that the prospective growth shadow as detected by the iris filter processing is a real growth shadow P1.

To the contrast, since a pseudo-abnormal-shadow P3 is rarely circular in shape, there is very weak possibility that the points i and j are both on the edge of the prospective growth shadow, that is, the IFEFD image counts for the pixels $\underline{i}$ and $\underline{j}$ are both larger than 1, when the prospective abnormal shadow as detected by the iris filter processing is a pseudo-abnormal shadow P3.

Accordingly, feature values of the simultaneous matrix (x, y) have significant differences between when the prospective abnormal shadow as detected by the iris filter processing is a real growth shadow P1 and when it is merely a pseudo-abnormal-shadow P3. The feature values of the simultaneous matrix form edge information. As the specific terms of the edge information, feature values of the simultaneous matrix, i.e., a fifth feature value $\underline{var}$ representing variance (the following formula (13)), a sixth feature value $\underline{dfe}$ representing difference entropy (the following formula (14)), a seventh feature value $\underline{cor}$ representing correlation (the following formula (15)), an eighth feature value $\underline{idm}$ representing inverse difference moment (the following formula (16)), and a ninth feature value $\underline{se}$ representing sum entropy (the following formula (17)) are calculated.

$$\mathrm{var} = \sum_i \sum_j \left\{ (i - u_x)^2 \bullet P_g(i,j) \right\} \quad \cdots\cdots\cdots \quad (13)$$

$$dfe = \sum_k \left\{ P_{x-y}(k) \bullet \log \left| P_{x-y}(k) \right| \right\} \quad \cdots\cdots \quad (14)$$

$$cor = \sum_i \sum_j \left[ \left\{ i \bullet j \bullet P_g(i,j) - u_x \bullet u_y \right\} / (\sigma_x \bullet \sigma_y) \right] \quad \cdots\cdots\cdots \quad (15)$$

$$idm = \sum_i \sum_k \left[ P_g(i,j) / \left\{ 1 + (i-j)^2 \right\} \right] \quad \cdots\cdots\cdots \quad (16)$$

$$se = -\sum_k \left[ P_{x+y}(k) \bullet \log \left\{ P_{x+y}(k) \right\} \right] \quad \cdots\cdots\cdots \quad (17)$$

wherein

$$u_x = \sum_i \left\{ i \bullet P_x(i) \right\}, u_y \sum_j \left\{ j \bullet P_y(j) \right\},$$

$$P_{x-y}(k) = \sum_i \sum_j P_g(i,j), k = \left| i - j \right|,$$

$$P_{x+y}(k) = \sum_i \sum_j P_g(i,j), k = i + j,$$

$$\sigma_x^2 = \sum_i (i - u_x)^2 \bullet P_x(i),$$

$$\sigma_y^2 = \sum_j (j - u_y)^2 \bullet P_y(j),$$

$P_x(i)$     is the projection distribution in j direction,

$$P_x(i) = \sum_j P_g(i, j),$$

and

$P_y(j)$     is the projection distribution in i direction,

$$P_y(j) = \sum_i P_g(i, j).$$

Then the malignant abnormal shadow detecting means 13b calculates a first likelihood ratio LR1 representing malignancy and a second likelihood ratio LR2 representing benignancy by the use of Mahalanobis distances based on the nine feature values and determines whether the prospective growth shadow is malignant or benignant.

When the Mahalanobis distance of the prospective growth shadow from a normal tissue distribution is represented by Dm1, the Mahalanobis distance from a malignant tissue distribution is represented by Dm2, and the Mahalanobis distance from a benignancy distribution is represented by Dm3, the first likelihood ratio LR1 representing malignancy is represented by Dm1/Dm2 and the second likelihood ratio LR2 representing benignancy is represented by Dm1/Dm3. The Mahalanobis distance is calculated according to the following formula (1).

$$Dmi = \left(\overrightarrow{x} - \overrightarrow{mi}\right)^t \sum\nolimits_i^{-1} \left(\overrightarrow{x} - \overrightarrow{mi}\right) \quad \cdots\cdots\cdots \quad (1)$$

wherein $\Sigma_i$ represents a covariance matrix of a pattern class wi (of normal shadows where i=1, of malignant shadows where i=2 and of benignant shadows where i=3), that is,

$$\sum\nolimits_i = (1/Ni) \sum_{x \in wi} \left(\overrightarrow{x} - \overrightarrow{mi}\right)\left(\overrightarrow{x} - \overleftarrow{mi}\right)^t$$

wherein t represents a transposed vector (a transverse vector), $\overrightarrow{x}$ represents a feature value x in vector (that is, $\overrightarrow{x}$ =(x1, x2, $\cdots$ , xN), $\Sigma_i^{-1}$ represents an inverse matrix of $\Sigma_i$ , and $\overrightarrow{mi}$ represents the average of the pattern class wi (that is

$$\overrightarrow{mi} = (1/Ni) \sum_{x \in wi} \overrightarrow{x}) .$$

The aforesaid nine feature values respectively correspond to x1 to x9 and express a nine-dimensional space (x1, x2, x3, $\cdots\cdots$, x9). The Mahalanobis distance between the prospective growth shadow area pattern as expressed on the nine-dimensional pattern space and a normal tissue distribution pattern as expressed on the nine-dimensional pattern space is Dm1, the Mahalanobis distance between the prospective growth shadow area pattern as expressed on the nine-dimensional pattern space and a malignant tissue distribution pattern as expressed on the nine-dimensional pattern space is Dm2, and the Mahalanobis distance between the prospective growth shadow area pattern as expressed on the nine-dimensional pattern space and a benignant tissue distribution pattern as expressed on the nine-dimensional pattern space is Dm3.

The normal tissue distribution pattern, the malignant tissue distribution pattern and the benignant tissue distribution pattern are pattern spaces defined by vector x which have been set respectively for normal shadows, malignant shadows and benignant shadows on the basis of the result of investigation on a lot of prospective abnormal shadows. For example, the pattern class w1 of normal shadows is defined by the average of the vectors x of normal shadows, the pattern class w2 of malignant shadows is defined by the average of the vectors x of malignant shadows, and the pattern class w3 of benignant shadows is defined by the average of the vectors x of benignant shadows.

For example, there is a tendency for the Mahalanobis distance from the malignant tissue distribution pattern class to be short (Dm2 is small) and for the Mahalanobis distance from the normal tissue distribution pattern to fluctuate when the prospective growth shadow area is malignant. To the contrast, there is a tendency for the Mahalanobis distance from the benignant tissue distribution pattern class to be short (Dm3 is small) and for the Mahalanobis distance from the normal tissue distribution pattern to fluctuate when the prospective growth shadow area is benignant. The first likelihood ratio LR1 (Dm1/Dm2) is for distinguishing the malignant growth shadow from the normal shadow on the basis of this fact and the second likelihood ratio LR2 (Dm1/Dm3) is for distinguishing the benignant growth shadow from the normal shadow on the basis of this fact. Thereafter the first and second likelihood ratios LR1 and LR2 are calculated.

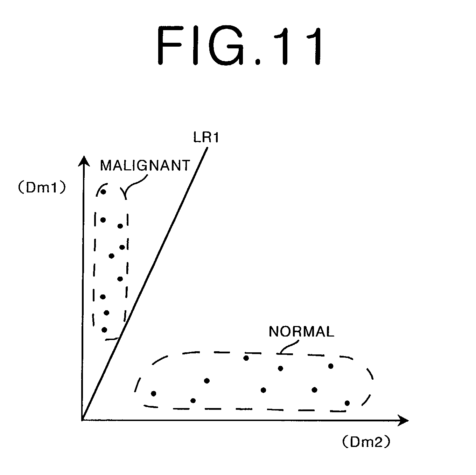

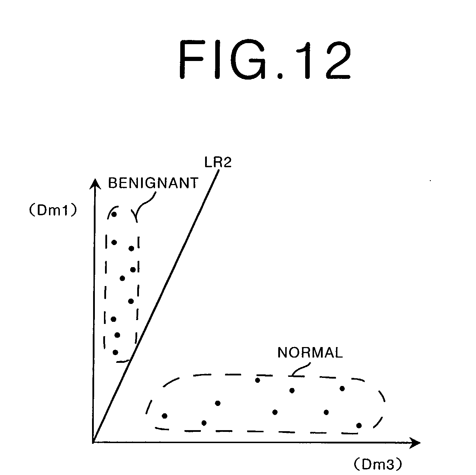

The first likelihood ratio LR1 represents the inclination of the straight line shown in Figure 11. That is, as the first likelihood ratio LR1 is larger, the probability that the prospective growth shadow is of a malignant growth is stronger and as the first likelihood ratio LR1 is smaller, the probability that the prospective growth shadow is of a normal tissue is stronger. Similarly, the second likelihood ratio LR2 represents the inclination of the straight line shown in Figure 12. That is, as the second likelihood ratio LR2 is larger, the probability that the prospective growth shadow is of a benignant growth is stronger and as the second likelihood ratio LR2 is smaller, the probability that the prospective growth shadow is of a normal tissue is stronger. The malignant abnormal shadow detecting means 13b detects as final prospective growth shadows only the prospective growth shadow areas where the first likelihood ratio LR1 (Dm1/Dm2) is larger than a first threshold value Th1.

When the position information D2 and the image data P are input into the benignant/malignant abnormal shadow detecting means 13c, the benignant/malignant abnormal shadow detecting means 13c further detects benignant prospective growth shadows and malignant prospective growth shadows out of the prospective growth shadow areas as detected by the iris filter processing in a manner similar to that described above. That is, the benignant/malignant abnormal shadow detecting means 13c calculates feature values of each of the prospective growth shadow areas on the basis of the position information D2 and the image data P, and calculates the first and second likelihood ratios LR1 (Dm1/Dm2) and LR2 (Dm1/Dm3) respectively representing malignancy and benignancy by the use of Mahalanobis distances calculated on the basis of the feature values. Then the benignant/malignant abnormal shadow detecting means 13c detects as final prospective growth shadow areas prospective growth shadow areas where the first likelihood ratio LR1 (Dm1/Dm2) is larger than a second threshold value Th2 or the second likelihood ratio LR2 (Dm1/Dm3) is larger than another threshold value Th2'. That is, the benignant/malignant abnormal shadow detecting means 13c further detects malignant prospective growth shadow areas on the basis of the first likelihood ratio LR1 and benignant prospective growth shadow areas on the basis of the second likelihood ratio LR2 and detects as final prospective growth shadows both the malignant prospective growth shadow areas and the benignant prospective growth shadow areas thus detected.

The result output means 20 displays the final prospective growth shadows and marks denoting the positions thereof (e.g., arrows or square frames) on a CRT on the basis of position information D3 representing the positions of the final prospective growth shadows and image data P which are input from the malignant abnormal shadow detecting means 13b or the benignant/malignant abnormal shadow detecting means13c. The first likelihood ratio LR1 and/or second likelihood ratio LR2 may be further displayed ion the CRT.

Though, in the above embodiment, the detecting level is to be selected only in two kinds, "malignant" and "benignant/malignant", it is possible to add "benignant" to the kinds of detecting levels from which the detecting level can be selected. In this case, the prospective abnormal shadow detecting system 13 is further provided with a benignant abnormal shadow detecting means which detects as final prospective growth shadows where the second likelihood ratio LR2 (Dm1/Dm3) representing benignancy is larger than a third threshold value Th3.

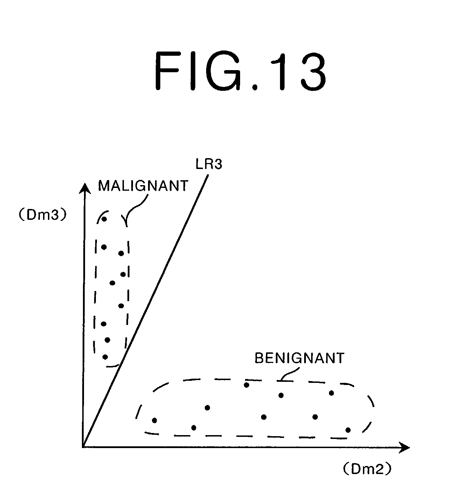

The benignant/malignant prospective growth shadow as detected by the benignant/malignant abnormal shadow detecting means 13c may be further divided into benignant prospective growth shadows and malignant prospective growth shadows. In this case, since as a third likelihood ratio, Dm3/Dm2, increases, the probability that the prospective abnormal shadow is of a malignant growth is stronger and as the third likelihood ratio decreases as shown in Figure 13, the probability that the prospective abnormal shadow is of a benignant growth is stronger, the prospective growth shadow areas where the third likelihood ratio LR3 is not smaller than a fourth threshold value Th4 is determined to be malignant and the prospective growth shadow areas where the third likelihood ratio LR3 is not smaller than the fourth threshold value Th4 is determined to be benignant.

The prospective abnormal shadow detecting system 10 of this embodiment may be further provided with an input means for inputting purpose information representing the purpose of detection and the detecting level selecting means 12 may be provided with an automatic detecting level selecting function for automatically selecting a detecting level on the basis of the purpose information input through the input means. The purpose information may be, for instance, reader information representing, for instance, the ID number of the doctor who reads the radiation image, terminal information representing the terminal through which the radiation image is to be output, or examination purpose information representing the purpose of examination such as a primary examination or a close examination. For example, when the purpose information is examination purpose information, the detecting level selecting means 12 may automatically select the "benignant/malignant" when examination purpose information representing a primary examination is input and select the "malignant" when examination purpose information representing a close examination is input. Otherwise, when the purpose information is reader information, the detecting level selecting means 12 may automatically select the "benignant/malignant" when reader information representing a reader A in charge of a primary examination is input and select the "malignant" when reader information representing a reader B in charge of a close examination is input. Otherwise, when the purpose information is terminal information, the detecting level selecting means 12 may automatically select the selecting level according to the terminal represented by the terminal information input.

The input means may be any means so long as purpose information can be input through the means. For example, terminal information or reader information may be input through the result output means 20, the purpose information recorded as attendant information of the image data P may be input from a storage means such as a server, or the user manually inputs purpose information through a mouse, a keyboard or a button.

Though, in the embodiment described above, the present invention is applied to detection of prospective growth shadows by iris filter processing, the present invention may be applied to various other methods including detection of prospective micro calcification shadows by morphology filtering processing.

Though, in the embodiment described above, nine feature values are employed, the number of the feature values employed need not be limited to nine and the kinds and the combination of feature values need not be limited to those in the embodiment described above.

Though, in the embodiment described, the point j is defined to be a point which is on a line perpendicular to the radial line on which the point i exists and is at a distance of two pixels from the point i (Figure 9), the angle which is formed by the line on which the point j exists and the radial line and the number of pixels by which the point j is spaced from the line may be changed according to, for instance, size of prospective growth shadow to be detected.

Further, though in the embodiment described above, the present invention is applied to a mammogram, the present invention may be applied to any other radiation images such as a chest CADs.

**Claims**

1. A prospective abnormal shadow detecting system comprising a prospective abnormal shadow detecting means which detects a prospective abnormal shadow in a radiation image on the basis of radiation image data representing the radiation image **characterized in that**

   the prospective abnormal shadow detecting system is further provided with a level selecting means for selecting a detecting level and
   the prospective abnormal shadow detecting means detects a prospective abnormal shadow to the detecting level selected by the level selecting means.

2. A prospective abnormal shadow detecting system as defined in Claim 1 in which the prospective abnormal shadow detecting means is arranged to detect only a malignant prospective abnormal shadow when the detecting level selected by the detecting level selecting means is "malignant" and to detect both a malignant prospective abnormal shadow and a benignant prospective abnormal shadow when the detecting level selected by the detecting level selecting means is "benignant/malignant".

3. A prospective abnormal shadow detecting system as defined in Claim 1 in which the prospective abnormal shadow detecting system is further provided with an input means for inputting purpose information representing the purpose of detection and the detecting level selecting means is provided with an automatic detecting level selecting function for automatically selecting a detecting level on the basis of the purpose information input through the input means.

4. A prospective abnormal shadow detecting system as defined in Claim 3 in which the purpose information is one of reader information, terminal information and examination purpose information.

# FIG.1

PROSPECTIVE ABNORMAL SHADOW DETECTING SYSTEM

DETECTING LEVEL SELECTING MEANS

PROSPECTIVE AREA DETECTING MEANS

MALIGNANT ABNORMAL SHADOW DETECTING MEANS

BENIGNANT/ MALIGNANT ABNORMAL SHADOW DETECTING MEANS

RESULT OUTPUT MEANS

P, D2

P, D3

D1

P

10

13

13a

13b

13c

12

20

# FIG.2A

P

P₃

I

I

P₁

P₂

# FIG.2B

P₁

# FIG.2C

P₂

# FIG.2D

P₃

# FIG.3

| $f_7$ | $f_6$ | $f_5$ | $f_4$ | $f_3$ |
|---|---|---|---|---|
| $f_8$ | | | | $f_2$ |
| $f_9$ | | j | | $f_1$ |
| $f_{10}$ | | | | $f_{16}$ |
| $f_{11}$ | $f_{12}$ | $f_{13}$ | $f_{14}$ | $f_{15}$ |

# FIG.4

# FIG.5

# FIG.6

# FIG.7

FIG.8

# FIG.9

A Q

j

i

P1,P3

# FIG.10

| i\j | 0 | 1 | 2 | 3 | 4 | 5 | 6 | 7 | 8 | 9 | 10 |
|---|---|---|---|---|---|---|---|---|---|---|---|
| 0 | 1 | | | | | | | | | | |
| 1 | | 1 | | | | | | | | | |
| 2 | | | | | | | | | | | |
| 3 | | | | | | | | | | | |
| 4 | | | | | | | | | | | |
| 5 | | | | 2 | | | | | | | |
| 6 | | | | | | | | | | | |
| 7 | | | | | | | | | | | |
| 8 | | | | | | | | | | | |
| 9 | | | | | | | | | | | |
| 10 | | | | | | | | | | | |

# FIG.11

LR1

MALIGNANT

(Dm1)

NORMAL

(Dm2)

# FIG.12

# FIG.13